# EUROPÄISCHE PATENTSCHRIFT

(11) **EP 1 735 074 B1**
(45) Veröffentlichungstag und Bekanntmachung des Hinweises auf die Patenterteilung: **04.06.2008**
(21) Anmeldenummer: 06722621.7
(22) Anmeldetag: 16.03.2006
(51) Int. Cl.: B01D 35/18, F01M 5/00, F01M 11/03

(54) **FILTER-KÜHLER-KOMBINATION FÜR FLÜSSIGKEITEN, INSBESONDERE SCHMIERÖL EINES KRAFTFAHRZEUG-VERBRENNUNGSMOTORS**
FILTER-COOLER COMBINATION FOR LIQUIDS, ESPECIALLY FOR THE LUBRICATING OIL OF A MOTOR VEHICLE
ENSEMBLE FILTRE-RADIATEUR DESTINE A DES LIQUIDES, NOTAMMENT A L'HUILE LUBRIFIANTE DU MOTEUR A COMBUSTION D'UN VEHICULE AUTOMOBILE

(30) Priorität: 18.03.2005 DE 102005012550
(43) Veröffentlichungstag der Anmeldung: 27.12.2006
(73) Patentinhaber: Mahle International GmbH, 70376 Stuttgart (DE)
(72) Erfinder: GRÜNER, Andreas, 73110 Hattenhofen (DE); SENDOR, Robert, 82515 Wolfratshausen (DE)
(74) Vertreter: Bongen, Renaud & Partner
(86) Internationale Anmeldenummer: PCT/DE2006/000465
(87) Internationale Veröffentlichungsnummer: WO 2006/097086

(56) Entgegenhaltungen:
- US-A- 5 014 775
- US-A- 5 351 664
- US-A- 5 544 699
- US-A- 5 797 450

## Beschreibung

Die Erfindung betrifft eine Filter-Kühler-Kombination für Flüssigkeiten nach dem Oberbegriff des Patentanspruchs 1.

Eine derartige Filter-Kühler-Kombination ist beispielsweise in verschiedenen Ausführungsformen bekannt aus US-A-5 797 450, US-A-5 014 775 und US-A-5 544 699. Diese bekannte Einrichtungen erlauben beispielsweise bei einem Ölfilter eines Verbrennungsmotors einen Austausch einer üblichen Anschraubpatrone gegen eine solche Filter-Kühler-Kombination möglichst ohne eine Veränderung des Basisbauteiles, an das die Filterpatrone anzuschrauben ist. In dem zuletzt genannten Fall ist das Filter in der Filter-Kühler-Kombination möglichst in der Form eines üblichen Anschraubfilterelementes ausgeführt, das gleicherweise entweder in die Kombination oder auch außerhalb einer solchen Kombination direkt an das Basisbauteil angeschraubt werden kann, wenn keine Filter-Kühler-Kombination gewünscht wird.

Aus US-A-5 351 664 ist eine Filter-Kühler-Kombination bekannt, bei der ein Luftkühler Bestandteil des gattungsgemäßen Anschlusselementes ist. Bei diesem Luftkühler wird die Kühlluft in keinem geschlossenen Strömungskanal geführt. Der Kühler wird vielmehr von außen frei umströmt.

Die Erfindung beschäftigt sich mit dem Problem, eine gattungsgemäße Filter-Kühler-Kombination konstruktiv zu vereinfachen, um hierdurch eine besonders kostengünstige, rationelle Fertigung zu ermöglichen.

Gelöst wird dieses Problem durch eine Ausbildung einer gattungsgemäßen Filter-Kühler-Kombination nach den kennzeichnenden Merkmalen des Patentanspruchs 1.

Vorteilhafte und zweckmäßige Ausgestaltungen sind Gegenstand der Unteransprüche.

Besonders vorteilhaft mit Bezug auf eine kostengünstige Herstellbarkeit der Filter-Kühler-Kombination ist ein Verfahren nach dem letzten Unteranspruch.

Erfindungsgemäß werden die erforderlichen Strömungs-Verteilkanäle für die zu filternde Flüssigkeit und die Kühlflüssigkeit innerhalb des Anschlusselementes in herstellungsmäßig geschickter Weise angeordnet. Die rationelle und damit kostengünstige Herstellung wird insbesondere dadurch erreicht, dass das Anschlusselement aus zwei Teilen zusammengefügt wird, nämlich einem Ober- und einem Unterteil, durch die ein Teil der Strömungskanäle jeweils direkt umgrenzt wird.

Besonders günstig im Sinne der Erfindung lässt sich ein Anschlusselement gemeinsam mit einem Kühler herstellen, wenn der Kühler in der Art eines Stapelscheiben-Ölkühlers ausgebildet ist und sämtliche Elemente, die miteinander zu verbinden sind, aus Metall bestehen. Dann sind nämlich sämtliche miteinander zu verbindende Teile und damit auch die Einzelteile des Stapelscheiben-Ölkühlers in einem einzigen Lötprozess auf einfachste Weise miteinander fest verbindbar.

Um das Anschlusselement ähnlich einer Anschraubpatrone auf einem Basisbauteil anbringen zu können, besitzt dieses Anschlusselement einen Anschlussbereich, der praktisch demjenigen entspricht, mit dem eine Anschraubpatrone an einem Basisbauteil befestigt wird. Im Zentrum dieses Anschlussbereiches des Anschlusselementes ist eine Durchgangsöffnung vorgesehen. Durch diese Durchgangsbohrung kann ein Gewindestutzen mit beidseitig angeformten Gewinden eingesetzt werden, wobei das Anschlusselement durch diesen Gewindestutzen fest mit dem Basisbauteil verbindbar ist und zwar in einer Art, wie üblicherweise eine Anschraubpatrone auf dem Basisbauteil befestigt wird. Das Gewindeende des Gewindestutzens, das nicht für die Befestigung des Anschlusselementes auf dem Basisbauteil benötigt wird und nach außerhalb einer Anschlussfläche des Anschlusselementes für einen Anschluss einer üblichen Filteranschraubpatrone herausragt, kann das Anschraubfilter in üblicher Weise aufnehmen. Dies bedeutet mit anderen Worten, dass die Filteranschraubpatrone auf dem Anschlusselement an dem Gewindestutzen in einer Weise aufgeschraubt werden kann, die mit der Anbringungsart an dem Basisbauteil gleich oder zumindest gleichartig ist.

Ein vorteilhaftes, nachstehend näher erläutertes Ausführungsbeispiel ist in der Zeichnung dargestellt.

In dieser zeigen
- Fig. 1: eine Filter-Kühler-Kombination in perspektivischer Explosionsdarstellung,
- Fig. 2: eine perspektivische Darstellung der Filter-Kühler-Kombination von unten.

Eine Filter-Kühler-Kombination umfasst einen mit einem Anschlusselement 1 fest verbundenen Ölkühler 2 bei einer Ausbildung aus beispielsweise Metall in einer Stapelscheiben-Ausführungsform an sich bekannter Art.

Mit Hilfe eines in eine Durchgangsöffnung 3 des Anschlusselementes 1 einsetzbaren Gewindestutzens 4 kann das Anschlusselement 1 auf einem nicht gezeichneten Basisbauteil, das ein Kurbelgehäuse eines Kraftfahrzeug-Verbrennungsmotors sein kann, fest aufgeschraubt werden. An dem Basisbauteil muss hierfür lediglich ein Anschlussbereich vorgesehen sein, wie er in gleicher Weise zur Aufnahme und Befestigung einer üblichen Filter-Anschraubpatrone 5 ausgebildet sein muss. Um das Anschlusselement 1 mit dem Gewindestutzen 4 fest auf ein Basisbauteil aufspannen zu können, besitzt der Gewindestutzen 4 zwischen seinen Enden einen Ringbund 16, der als Widerlager zur Abstützung an dem Anschlusselement 1 dient. An dem Ende des Gewindestutzens 4, das demjenigen gegenüberliegt, mit dem die Befestigung an dem Basisbauteil erfolgt, ist das für einen Anschluss einer üblichen Filter-Anschraubpatrone 5 erforderliche Aufnahmegewinde vorgesehen.

Der Anschlussbereich, mit dem das Anschlusselement 1 auf das Basisbauteil aufgespannt ist, ist praktisch in gleicher Weise ausgebildet, wie der entsprechende Anschlussbereich einer üblichen Filteranschraubpatrone 5. Dies bedeutet, dass in diesem Anschlussbereich des Anschlusselementes 1 eine axial dichtende Ringdichtung 6 vorgesehen ist. Konkret lagert diese Ringdichtung 6 in einer für deren Aufnahme geeigneten Ringnut des Anschlusselementes 1. Die Ringdichtung 6 umschließt einen ersten Ringkanal 7, der stirnseitig offen in dem Anschlusselement 1 ausgebildet ist, wodurch er bei Anlage des Anschlusselementes 1 an dem Basisbauteil geschlossene Form annimmt und nach außen durch die Ringdichtung 6 gedichtet ist. An den ersten Ringkanal 7 grenzt axial getrennt ein zweiter Ringkanal 8 an. Beide Ringkanäle 7 und 8 umschließen den in das Anschlusselement 1 eingesetzten Gewindestutzen 4. Umfangsmäßig geschlossen ist der zweite Ringkanal 8 dadurch, dass er zwischen einem das Anschlusselement 1 bildenden Oberteil und einem Unterteil 9; 10 liegt, die miteinander dicht verbunden sind.

Von dem ersten Ringkanal 7 aus gelangt zu filternde Flüssigkeit durch den Kühler 2 hindurch in den zweiten Ringkanal 8, von dem aus die Flüssigkeit durch Öffnungen 11 innerhalb des Oberteiles 9 über einen dritten Ringkanal 12 in eine angeschraubte Filteranschraubpatrone 5 beispielsweise rohseitig gelangen kann. Von den Ringkanälen 7 und 8 in den Ölkühler 2 führende Strömungskanäle 13 sind in das Anschlusselement 1 eingeformt. Die Einformung ist dort zumindest bezüglich der größten Bereiche dieser Strömungskanale 13 in gleicher Weise wie bei dem zweiten Strömungskanal 8 derart vorgenommen, dass diese Strömungskanalbereiche zwischen Ober- und Unterteil 9; 10 des Anschlusselementes 1 zu liegen kommen. Aus der Filteranschraubpatrone 5 kann gefilterte Flüssigkeit durch den hohlen Innenraum 4' des Gewindestutzens 4 zu dem Basisbauteil hin abfließen.

Anstelle einzelner, voneinander getrennter Öffnungen 11 kann auch ein um den Gewindestutzen 4 offen umlaufender Ringbereich vorgesehen sein, durch den die Ringkanäle 8 und 12 praktisch einen gemeinsamen, axial durchgehenden Ringkanal bilden. Bezüglich dieses Ringkanales ist lediglich dafür zu sorgen, dass eine dichte Abtrennung gegenüber dem Inneren 4' des Gewindestutzens 4 gegeben ist. Hierfür sorgt der an dem Gewindestutzen 4 vorgesehene Ringbund 4' durch eine dichte Anlage an der Durchgangsbohrung 3.

Die Filteranschraubpatrone 5 ist über eine Ringdichtung 6' gegenüber dem Anschlusselement 1 gedichtet, die mit der Ringdichtung 6, über die das Anschlusselement 1 auf dem Basisbauteil gedichtet wird, übereinstimmt. Für die Zu- und Abfuhr der durch den Kühler 2 zu leitenden Kühlflüssigkeit sind an dem Anschlusselement 1 Anschlusskanäle 14 vorgesehen.

Die Strömung der zu filternden Flüssigkeit einerseits und der Kühlflüssigkeit andererseits sind durch Strömungspfeile in der Zeichnung markiert. Dabei bezeichnen innerhalb des Ölkühlers die Strömungspfeile A die Strömung der Kühlflüssigkeit und die Strömungspfeile B die Strömung der zu filternden Flüssigkeit. Die Bezeichnungen A, B der Strömungen sind auch den anderen Strömungspfeilen jeweils entsprechend zugeordnet.

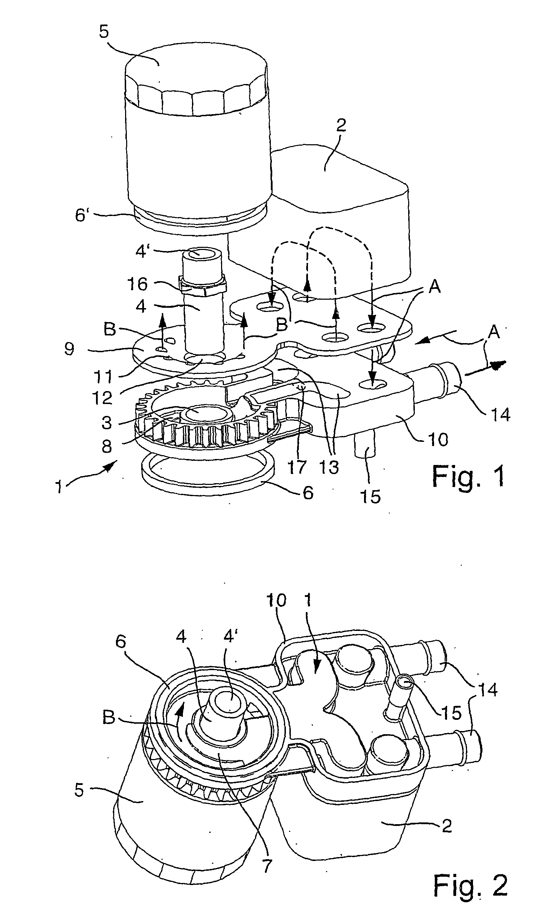

Zwischen den innerhalb des Anschlusselementes 1 liegenden Strömungskanälen 13 können Bypassventile vorgesehen sein für beispielsweise ein Umgehen des Kühlers 2 durch kaltes Schmieröl. Ein solches Bypassventil 17 ist in Fig. 1 strichpunktiert angedeutet. Um auf einem Basisbauteil verdrehfest angeschraubt zu werden, ist an dem Anschlusselement 1 ein Fixierelement 15 in der Form eines Fixierstiftes vorgesehen. Dieser Fixierstift 15 kann in eine zugeordnete Öffnung des Basisbauteiles eingeschoben werden, wodurch eine Verdrehsicherheit des Anschlusselementes 1 beim Aufschrauben mit Hilfe des Gewindestutzens 4 gegeben ist.

Bei dem Einsatz eines Kühlers 2 in der Art eines aus Metall bestehenden Stapelscheibenkühlers bekannter Bauweise kann bei einer Ausbildung des Ober- und Unterteils 9; 10 des Anschlusselementes 1 aus ebenfalls Metall eine Verbindung der einzelnen Teile untereinander in einem gemeinsamen Lötprozess erfolgen. Auf eine solche Weise kann eine erfindungsgemäße Filter-Kühler-Kombination äußerst wirtschaftlich hergestellt werden.

Die erfindungsgemäße Filter-Kühler-Kombination ist derart ausgebildet, dass an einem Basisbauteil mit gleichen Anschlussverhältnissen entweder das Anschlusselement 1 oder eine Filteranschraubpatrone 5 direkt angebracht werden können. Auf diese Weise kann beispielsweise ein Kraftfahrzeugverbrennungsmotor wahlweise mit entweder lediglich einem Filter in der Form einer Anschraubpatrone 5 betrieben werden oder mit einer Kombination aus einem Filter und einem Kühler, ohne dass für diese Wahlmöglichkeit an dem Kurbelgehäuse des Verbrennungsmotors für beide Anwendungsfälle unterschiedliche Anschlusselemente geschaffen werden müssen.

Alle in der Beschreibung und in den nachfolgenden Ansprüchen dargestellten Merkmale können sowohl einzeln als auch in beliebiger Form miteinander kombiniert erfindungswesentlich sein.

## Patentansprüche

1. Filter-Kühler (2)-Kombination für Flüssigkeiten, in der Schmieröl eines Kraftfahrzeug-Verbrennungsmotors gekühlt und gefiltert werden kann, bei der
- der Kühler (2) von Flüssigkeiten als Kühlmedium durchströmt wird,
- das Filter als eine auf einer Stirnseite Zu- und Abflussöffnungen enthaltende, auf dieser Stirnseite radial gedichtet auf ein Anschlusselement (1) mit den Zu- und Ablauföffnungen zugeordneten ersten Anschlusskanälen durch ein Zentralgewinde lösbar anschraubbare Anschraubpatrone (5) ausgebildet ist,
- das Anschlusselement (1) den Kühler (2) umfasst und jeweils für, von beziehungsweise nach außerhalb der Filter-Kühler-Kombination gerichtete Zu- und Abführkanäle des Kühlmittels zweite Anschlusskanäle (14) und die zu filternde Flüssigkeit dritte Anschlusskanäle (7; 3, 4') besitzt,
- das Anschlusselement (2) unter Zuordnung der dritten Anschlusskanäle (7; 3, 4') gegenüber Anschlusskanälen eines das Anschlusselement (1) tragenden Basisbauteiles mit diesem Basisbauteil lösbar verbindbar ist,
- das Anschlusselement (1) durch einen in das Anschlusselement (1) einsetzbaren, rohrförmigen, beidseitig offenen Gewindestutzen (4), mit dem Basisbauteil lösbar verbindbar ist, wobei der Gewindestutzen (4)
- einenends ein erstes Gewinde zum Aufschrauben der Filteranschraubpatrone (5)
- und anderenends ein zweites Gewinde zum Anschrauben an einen Anschlusskanal des Basisbauteils besitzt,
- von den dritten, insgesamt zwei, einen Zu- und einen Abfluss ermöglichenden Anschlusskanälen einer von dem Innenraum (4') des Gewindestutzens (4) gebildet wird und der andere von einem ersten Ringkanal (7), der sich in einem direkt zu dem Gewindestutzen (4) benachbarten Bereich eines Anschlussbereiches des Anschlusselementes (1) befindet, mit dem das Anschlusselement (1) durch den Gewindestutzen (4) auf das Basisbauteil aufgespannt wird, wobei beide Anschlusskanäle (7, 4') durch ein umlaufendes Dichtelement (6) umfasst sind, durch das beide Anschlusskanäle (7, 4') in der Form einer Ringdichtung bei auf das Basisbauteil aufgespanntem Anschlusselement (1) nach außerhalb gedichtet sind.
**gekennzeichnet durch** die Merkmale,
- der erste Ringkanal (7) kommuniziert innerhalb des Anschlusselementes (1) mit dem Kühler (2),
- der Kühler (2) ist in der Art eines an sich bekannten Stapelscheiben-Ölkühlers ausgebildet,
- der Stapel-Scheibenbereich des Kühlers (2) liegt bei mit dem Anschlusselement (1) verbundenem Kühler (2) in einer senkrecht zu der Mittelachse der Filteranschraubpatrone (5) liegenden Ebene neben der Filteranschraubpatrone (5),
- innerhalb des Anschlusselementes (1) umschließt axial getrennt von dem ersten Ringkanal (7) ein von zu filternder Flüssigkeit durchströmbarer, mit dem Ölabströmbereich des Kühlers (2) kommunizierender, zweiter Ringkanal (8).

2. Filter-Kühler-Kombination nach einem der vorhergehenden Ansprüche,
**dadurch gekennzeichnet,**
**dass** das Anschlusselement (1) mit einem, dieses an dem Basisbauteil verdrehsicher montierbarem Fixierelement (15) versehen ist.

3. Filter-Kühler-Kombination nach Anspruch 1 oder 2,
**dadurch gekennzeichnet,**
**dass** sich das Anschlusselement (1) aus zwei fest und dicht miteinander verbundenen Teilen, nämlich einem der anzuschraubenden Filteranschraubpatrone (5) zugewandten Oberteil (9) und einem dem Basisbauteil, an das es anschließbar ist, zugewandten Unterteil (10) zusammensetzt, wobei in dem Anschlusselement (1) vorhandene, unter anderem den Kühler (2) und die Filteranschraubpatrone (5) miteinander verbindende Strömungskanäle (8, 13) zumindest teilweise zwischen diesen beiden Teilen (9, 10) verlaufen und von diesen begrenzt werden.

4. Filter-Kühler-Kombination nach Anspruch 3,
**dadurch gekennzeichnet,**
**dass** der Kühler (2) in einem mit dem Oberteil (9) des Anschlusselementes (1) verbindbaren Gehäuse liegt.

5. Filter-Kühler-Kombination nach Anspruch 3 oder 4,
**dadurch gekennzeichnet,**
**dass** die von dem Anschlusselement (1) umfassten Elemente, nämlich der Kühler (2) mit dessen Gehäuse sowie das Ober- und Unterteil (9; 10) unter Ausbildung und/oder Aufrechterhaltung dichter Strömungskanäle miteinander verschweißt, verlötet oder verklebt sind.

6. Filter-Kühler-Kombination nach einem der vorhergehenden Ansprüche,
**dadurch gekennzeichnet,**
**dass** der Kühler (2) als ein aus Metall bestehender und in einem an sich bei solchen Kühlern bekannten Lötverbindungsverfahren herstellbarer Kühler ausgebildet ist.

7. Filter-Kühler-Kombination nach einem der vorhergehenden Ansprüche,
**dadurch gekennzeichnet,**
**dass** innerhalb des Anschlusselementes (1) ölstromseitig stromauf des Öl-Kühlers (2) zwischen den Strömungskanälen (13) mindestens ein Bypassventil (17) vorgesehen ist.

8. Filter-Kühler-Kombination nach Anspruch 6,
**dadurch gekennzeichnet,**
**dass** die das Anschlusselement (1) sowie den Kühler (2) bildenden Teile zu einer Kompakteinheit verlötet sind.

## Claims

1. A filter-cooler (2) combination for liquids, in which lubricating oil of an automotive internal combustion engine can be cooled and filtered, wherein
- fluids flow through the cooler (2) as a cooling medium,
- the filter is designed as a detachable screw-on cartridge (5) that has inlet and outlet openings on one end and can be screwed by a central thread onto a connecting element (1) with a radial seal, with first connecting channels assigned to the inlet and outlet openings,
- the connecting element (1) comprises the cooler (2) and has second connecting channels (14) for the inlet and outlet channels for the coolant, directed away from and/or outside of the filter-cooler combination, and the fluid to be filtered has third connecting channels (7; 3, 4'),
- the connecting element (1) is detachably connectable to the base part with the assignment of the third connecting channels (7; 3, 4') with respect to connecting channels of said base part carrying the connecting element (1),
- the connecting element (1) is detachably connectable to the base part by a tubular threaded connection (4), which is open on both ends and can be inserted into the connecting element (1), whereby said threaded connection (4) has
- at one end a first thread for screwing the screw-on filter cartridge (5),
- and at the other end a second thread for screwing on a connecting channel of the base part,
- of the third connecting channels, permitting a total of two flows, one inlet and one outlet, one connecting channel is formed by the interior space (4') of the threaded connection, and the other is formed by a first ring channel (7) which is situated in an area of a connecting area of the connecting element (1) directly adjacent to the threaded connection (4), with which the connecting element (1) is braced on the base part by the threaded connection (4), whereby the two connecting channels (7, 4') are surrounded by a peripheral sealing element (6) by means of which the two connecting channels (7, 4') in the form of a ring gasket with the connecting element (1) braced onto the base part are sealed toward the outside,
**characterized by** the features
- the first ring channel (7) communicates with the cooler (2) within the connecting element (1),
- the cooler (2) is designed in the manner of a known stacked-disk oil cooler,
- the stacked-disk area of the cooler (2) is situated next to the screw-on filter cartridge (5) in a plane perpendicular to the central axis of the screw-on filter cartridge (5) when the cooler (2) is connected to the connecting element (1),
- within the connecting element (1), a second ring channel (8) communicates with the oil outflow area of the cooler (2) through which fluid to be filtered flows and surrounds axially separated from the first ring channel (7).

2. The filter-cooler combination according to any one of the preceding claims,
**characterized in that**
the connecting element (1) is provided with a fixing element (15) that can be mounted on the base part in a twist-proof manner.

3. The filter-cooler combination according to claim 1 or 2,
**characterized in that**
the connecting element (1) consists of two parts that are fixedly and tightly joined together, namely a top part (9) facing the screw-on filter cartridge (5) that is to be screwed onto the connecting element, and a bottom part (10) facing the base part to which it can be connected, whereby flow channels (8, 13) that are present in the connecting element (1) and join the cooler (2) and the screw-on filter cartridge (5) together, among other things, run at least partially between these two parts (9, 10) and are bordered by them.

4. The filter-cooler combination according to claim 3,
**characterized in that**
the cooler (2) is situated in a housing that can be connected to the top part (9) of the connecting element (1).

5. The filter-cooler combination according to claim 3 or 4,
**characterized in that**
the elements comprised by the connecting element (1), namely the cooler (2) with its housing and the top part (9) and the bottom part (10) are welded, soldered or glued together, forming and/or maintaining tight flow channels.

6. The filter-cooler combination according to any one of the preceding claims,
**characterized in that**
the cooler (2) is designed as a cooler that is made of metal and can be manufactured by a solder joining method which is essentially known for such filters.

7. The filter-cooler combination according to any one of the preceding claims,
**characterized in that**
at least one bypass valve (17) is provided between the flow channels (13) within the connecting element (1) on the oil flow side upstream from the oil cooler (2).

8. The filter-cooler combination according to claim 6,
**characterized in that**
the parts forming the connecting element (1) and the cooler (2) are soldered together to form a compact unit.

## Revendications

1. Ensemble filtre - refroidisseur (2) destiné à des liquides, dans lequel l'huile de lubrification d'un moteur à combustion interne de véhicule automobile peut être refroidie et filtrée, ensemble dans lequel
- le refroidisseur (2) est balayé par des liquides en tant qu'agents de refroidissement,
- le filtre est réalisé sous forme d'une cartouche à visser (5) contenant sur un côté frontal des ouvertures d'arrivée et d'évacuation, qui peut être vissée de façon amovible au travers d'un taraudage central, étanchéifiée sur ce côté frontal dans la direction radiale, sur un élément de raccordement (1) avec des premiers canaux de raccordement associés aux ouvertures d'arrivée et d'évacuation,
- l'élément de raccordement (1) entoure le refroidisseur (2) et présente respectivement des deuxièmes canaux de raccordement (14) pour des canaux d'arrivée et d'évacuation de l'agent de refroidissement, dirigés de ou en direction de l'extérieur de l'ensemble filtre - refroidisseur et les troisièmes canaux de raccordement (7 ; 3, 4') pour le liquide à filtrer,
- l'élément de raccordement (1), en association des troisièmes canaux de raccordement (7 ; 3, 4') par rapport aux canaux de raccordement d'un composant de base supportant l'élément de raccordement (1), peut être assemblé de façon amovible avec ce composant de base,
- l'élément de raccordement (1) peut être assemblé de façon amovible avec le composant de base par une tubulure filetée (4) tubulaire, ouverte bilatéralement, qui peut être mise en place dans l'élément de raccordement (1), la tubulure filetée (4) présentant
- sur une extrémité un premier filetage pour le vissage de la cartouche filtrante à visser (5),
- et sur l'autre extrémité un second filetage pour le vissage sur un conduit de raccordement du composant de base,
- sur les troisièmes, au total deux, canaux de raccordement permettant une arrivée et une évacuation, l'un est formé par l'espace intérieur (4') de la tubulure filetée (4), et l'autre est formé par un premier canal annulaire (7) qui se situe dans une zone, directement voisine de la tubulure filetée (4), d'une zone de raccordement de l'élément de raccordement (1), par laquelle l'élément de raccordement (1) est fixé sur le composant de base par la tubulure filetée (4), les deux canaux de raccordement (7, 4') étant entourés par un joint d'étanchéité (6) périphérique, par lequel sont étanchéifiés les deux canaux de raccordement (7, 4') en direction de l'extérieur dans la forme d'un joint d'étanchéité annulaire lorsque l'élément de raccordement (1) est fixé sur le composant de base,
**caractérisé par** les caractéristiques,
- le premier canal annulaire (7) communique à l'intérieur de l'élément de raccordement (1) avec le refroidisseur (2),
- le refroidisseur (2) est réalisé à la manière d'un refroidisseur d'huile à disques empilés connu en soi,
- la zone des disques empilés du refroidisseur (2) se situe, lorsque le refroidisseur (2) est assemblé avec l'élément de raccordement (1), dans un plan perpendiculaire à l'axe médian de la cartouche filtrante à visser (5), à côté de la cartouche (5),
- à l'intérieur de l'élément de raccordement (1), un deuxième canal annulaire (8), pouvant être balayé par le liquide à filtrer et communiquant avec la zone d'évacuation d'huile du refroidisseur (2), entoure dans la direction axiale le premier canal annulaire (7), séparément de ce dernier.

2. Ensemble filtre - refroidisseur suivant l'une des revendications précédentes, **caractérisé en ce que** l'élément de raccordement (1) est muni d'un élément de fixation (15), par lequel il peut être monté de façon résistante à la torsion sur le composant de base.

3. Ensemble filtre - refroidisseur suivant l'une des revendications 1 et 2, **caractérisé en ce que** l'élément de raccordement (1) est composé de deux parties assemblées fixement et hermétiquement entre elles, à savoir d'une partie supérieure (9), tournée vers la cartouche filtrante à visser (5), et d'une partie inférieure (10) tournée vers le composant de base, auquel elle peut être raccordée, des canaux d'écoulement (8, 13), prévus dans l'élément de raccordement (1) et reliant mutuellement, entre autres, le refroidisseur (2) et la cartouche filtrante à visser (5), s'étendant au moins partiellement entre ces deux parties (9, 10) et étant délimités par ces dernières.

4. Ensemble filtre - refroidisseur suivant la revendication 3, **caractérisé en ce que** le refroidisseur (2) se situe dans un carter qui peut être assemblé avec la partie supérieure (9) de l'élément de raccordement (1).

5. Ensemble filtre - refroidisseur suivant l'une des revendications 3 et 4, **caractérisé en ce que** les éléments compris par l'élément de raccordement (1), à savoir le refroidisseur (2) avec son carter ainsi que la partie supérieure et la partie inférieure (9 ; 10), sont soudés, brasés ou collés entre eux en réalisant et/ou en maintenant des canaux d'écoulement étanches.

6. Ensemble filtre - refroidisseur suivant l'une des revendications précédentes, **caractérisé en ce que** le refroidisseur (2) est réalisé sous forme d'un refroidisseur composé de métal et qui peut être fabriqué par un procédé d'assemblage par brasage connu en soi pour de tels refroidisseurs.

7. Ensemble filtre - refroidisseur suivant l'une des revendications précédentes, **caractérisé en ce qu'**au moins une soupape de dérivation (17) est prévue à l'intérieur de l'élément de raccordement (1), du côté flux d'huile, en amont du refroidisseur d'huile (2) entre les canaux d'écoulement (13).

8. Ensemble filtre - refroidisseur suivant la revendication 6, **caractérisé en ce que** les parties formant l'élément de raccordement (1) ainsi que le refroidisseur (2) sont brasés en une unité compacte.
